# EUROPÄISCHE PATENTSCHRIFT

(11) **EP 0 015 570 B1**
(45) Veröffentlichungstag und Bekanntmachung des Hinweises auf die Patenterteilung: **22.12.1982**
(21) Anmeldenummer: 80101163.6
(22) Anmeldetag: 07.03.1980
(51) Int. Cl.: C09B 57/04, C08K 5/34, C09D 11/02, C09D 5/00

(54) **Isoindolinpigmente und deren Verwendung**
Isoindolin pigments and their use
Pigments isoindoliniques et leur utilisation

(30) Priorität: 12.03.1979 DE 2909645
(43) Veröffentlichungstag der Anmeldung: 17.09.1980
(73) Patentinhaber: BASF Aktiengesellschaft, 67063 Ludwigshafen (DE)
(72) Erfinder: Lotsch, Wolfgang, Dr., D-6711 Beindersheim (DE)

## Beschreibung

Die 'Erfindung betrifft neue Isoindolinpigmente der allgemeinen Formel 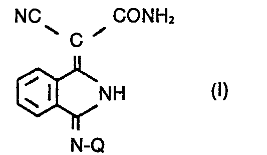 in der
Q eine Gruppe der Formel

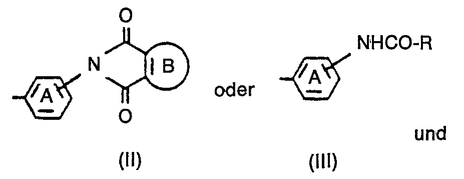

R N-Phenylcarbamoyl
bedeuten, worin A für 1,3- oder 1,4-Phenylen und der Ring B für 1,2-Phenylen, 1,2- oder 2,3-Naphthylen stehen und wobei A, B und der Phenylrest in R, unabhängig voneinander unsubstituiert oder durch nicht löslich machende Gruppen substituiert sind.

Die Farbstoffe der Formel sind Pigmente und eignen sich zum Pigmentieren von Lacken und Druckfarben. Sie geben in diesen Medien farbtonreine gelbe Färbungen, welche neben guten Migrationsechtheiten hervorragende Lichtechtheit aufweisen.

In FR-A-1537 299 werden Farbstoffe beschrieben, die durch Umsetzen von '1,'3-Diiiminoisondolinen mit Verbindungen beschrieben, die an einem C- oder N-Atom 2 aktive Wasserstoffatome aufweisen.

Als Verbindungen, welche an einem C- oder N-Atom 2 aktive Wasserstoffatome tragen, werden u. a. Cyanacetamide und primäre Amine genannt. In den Beispielen werden jedoch keine Farbstoffe beschrieben, die durch Umsetzen von 1,3-Diiminoisoindoiln mit einem Cyanacetamid und einer Anilinverbindung erhalten werden. Nach den Angaben in der Beschreibung und den Beispielen sind die Farbstoffe vor allem Dispersionsfarbstoffe z. B. für Polyester.

Aus FR-A-2307008 ist bekannt, dass 'Farbstoffe der Formel 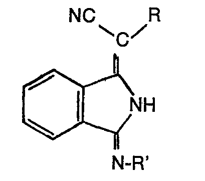 in der R u. a. ein Carbamoyl und R' ein aromatischer oder heterocyclischer Rest sein können, zum Massefärben von Polyestern geeignet sind, da sich diese Farbstoffe in Polyestern lösen und in diesem Medium bis 300°C stabil sind.

Demgegenüber sind die Verbindungen (I) der vorliegenden Erfindung Pigmente und in den in der FR-A-2 307 008 genannten Medien nicht löslich. Mit den Pigmenten der vorliegenden Erfindung erhält man migrationsechte Färbungen.

Unter nicht löslich machende Substituenten werden solche verstanden, die weder in Wasser noch in organischen Lösungsmitteln eine Löslichkeit des Farbstoffs bewirken, z. B. Halogenatome, Alkyl- oder Alkoxygruppen mit 1 bis 6 C-Atomen, Nitro-, Trifluormethyl-, Carbamoyl-, Ureido-, Sulfamoyl- oder Cyangruppen; Alkoxycarbonyl-, Alkanoyl-, Alkylcarbamoyl-, Alkylureido- oder Alkanoylaminogruppen mit je 1 bis 5 C-Atomen im Alkyl; Alkylsulfonyl- oder Alkylsulfamoylgruppen mit je 1 bis 6 C-Atomen; Aryloxycarbonyl-, Aroyl-, Aroylamino-, Arylsulfonyl-, Arylcarbamoyl-, Arylsulfamoyl-, Aryl-, Arylureido-oder Arylazogruppen.

Bevorzugte unlöslich machende Substituenten sind Chlor, Brom, C₁,- bis C₄-Alkyl und/oder C,- bis C4-Alkoxy.

N-Phenylcarbamoyl ist gegebenenfalls im Phenylrest durch Chlor, Brom, Methyl oder Methoxy substituiert.

Von den Verbindungen der Formel sind die Farbstoffe der Formel IV bevorzugt: 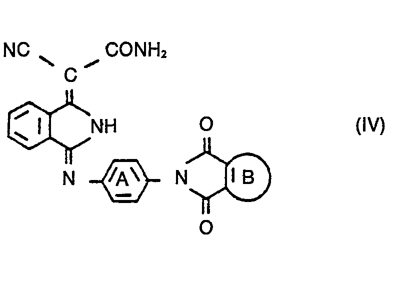 worin A und B die oben genannte Bedeutung haben.

Besonders bevorzugt sind Farbstoffe der Formel I, in der Q für die Gruppe der Formel 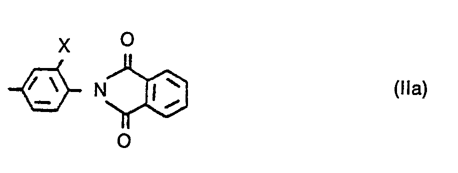 steht, in der X Wasserstoff, Chlor, Methyl oder Methoxy bedeutet.

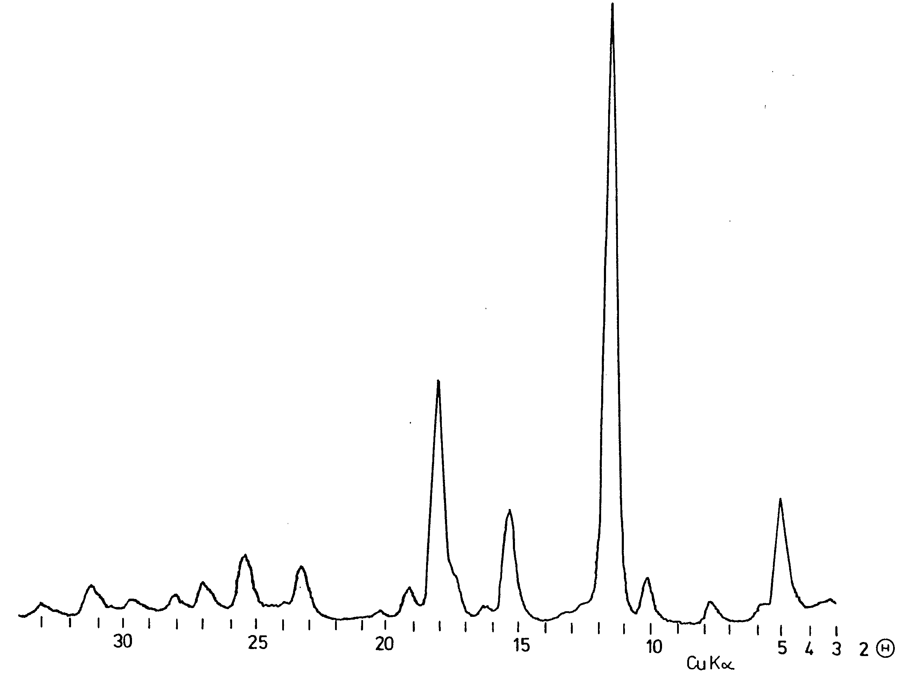

Ganz besonders bevorzugt ist die Verbindung der Formel V 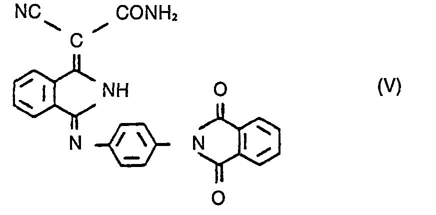 in einer Pigmentform, die durch das in Fig. 1 wiedergegebene Röntgendiagramm charakterisiert wird.

Zu den erfindungsgemässen Farbstoffen gelangt man, wenn man Diiminoisoindolin in an sich bekannter Weise mit einem Moi der Verbindung 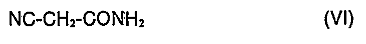 kondensiert und das Umsetzungsprodukt (Halbkondensationsprodukt) der Formel 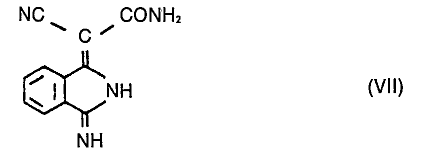 mit einem Mol der Verbindung 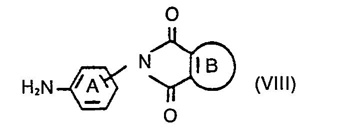 oder 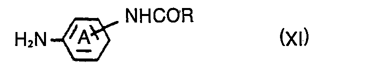 wobei A, B und R die oben angegebene Bedeutung haben, kondensiert.

Die Kondensation des Diiminoisoindolins mit den cyanmethylenaktiven Verbindungen der Formel VI erfolgt vorzugsweise in Wasser oder in einem organischen Lösungs- oder Verdünnungsmittel, beispielsweise einem aliphatischen Alkohol mit 1 bis 4 C-Atomen, wie Methanol, Äthanol, Isopropanol, Butanol, ferner Glykolen oder Glykoläthern, offenkettigen oder cyclischen Amiden, wie Dimethylformamid, 'Dimethylacetamid oder N-Methylpyrrolidon oder in Mischungen der vorgenannten Lösungsmittel. Ein geringer Überschuss an Diiminoisoindolin kann vorteilhaft sein. Die Menge an Lösungs- und Verdünnungsmittel ist an sich unkritisch und wird bestimmt durch die Rührbarkeit bzw. Mischbarkeit des Reaktionsansatzes. Die Umsetzung erfolgt in der Regel bei Temperaturen unterhalb von 100°C.

Die Kondensation der Halbkondensationsprodukte der Formel VII mit den Anilinderivaten der Formel VIII und IX erfolgt in den vorstehend genannten Lösungsmitteln, vorzugsweise jedoch in aliphatischen Monocarbonsäuren wie Essigsäure oder Propionsäure bei Temperaturen zwischen'50 und 150"C.

Sowohl die Hafbkondensationsprodukte der Formel VII als auch die Pigmente der Formel 'I fallen in der Hitze aus und können durch Abfiltrieren und gegebenenfalls durch Waschen mit organischen Lösungsmitteln in reiner 'Form isoliert werden.

Durch geeignete Reaktionsführung gelingt es, auch beide Reaktionsschritte ohne Zwischenisolierung der Halbkondensationsprodukte der Formel VII im selben Reaktionsgefäss durchzuführen.

Die erhaltenen Rohprodukte können im allgemeinen als Pigmente verwendet werden. Sie können aber auch nach an sich bekannten Formierungsverfahren in für ihren vorgesehenen Verwendungszweck optimale Pigmentformen überführt werden. In einigen Fällen gelingt es durch eine solche Formierung besonders wertvolle Pigmentformen zu erhalten, z. B. beim Rohprodukt der Formel V.

Die folgenden Beispiele sollen die Erfindung zusätzlich erläutern. Die im folgenden angegebenen Teile und Prozentangaben beziehen sich auf das Gewicht.

### Beispiel 1

21 Teile 1-(Cyan-carbonamidomethylen)-3--iminoisoindolin und 24 Teile 4-Phthalimidoanilin werden in '500 Teilen Eisessig 4 Stunden zum Sieden erhitzt. Nach dem Abkühlen wird filtriert, mit Eisessig und Methanol gewaschen und getrocknet. Man erhält 41 Teile des Pigmentes der Formel V, welches sich in dieser Form d_{'}i-rekt als Pigment in Anstrich- und Kunststoffe einarbeiten lässt. Die damit erzielten 'Färbungen zeichnen sich durch einen reinen, grünstichig gelben Farbton aus mit guten Migrations- und Lichtechtheiten.

Eine besonders vorteilhafte Pigmentform des Pigmentes der Formel V erhält man, wenn man beispielsweise 10 Teile davon in 200 Teilen Dimethylformamid 4 Stunden bei 100°C rührt. Nach dem Abkühlen, Filtrieren und Waschen mit Dimethylformamid und Methanol erhält man 9,3 Teile einer Pigmentform der Verbindung der Formel V, welche durch das in Fig. 1 wiedergegebene Röntgenbeugungsdiagramm charakterisiert wird (Tabelle).

Lackeinfärbungen mit dieser neuen Pigmentform zeichnen sich durch einen reinen, grünstichig gelben Farbton mit guten Überspritzechtheiten und hervorragenden Wetterechtheiten aus.

### Beispiele 2 bis 1_{'}5

Man verfährt wie in Beispiel 1 angegeben, verwendet jedoch die in der folgenden Tabelle angegebenen Anilinderivate der Formeln VIII oder IX. Man erhält die entsprechenden Verbindungen der Formel I, die im Lack Färbungen mit vergleichbar guten Eigenschaften in den in der rechten Spalte angegebenen Farbtönen geben.

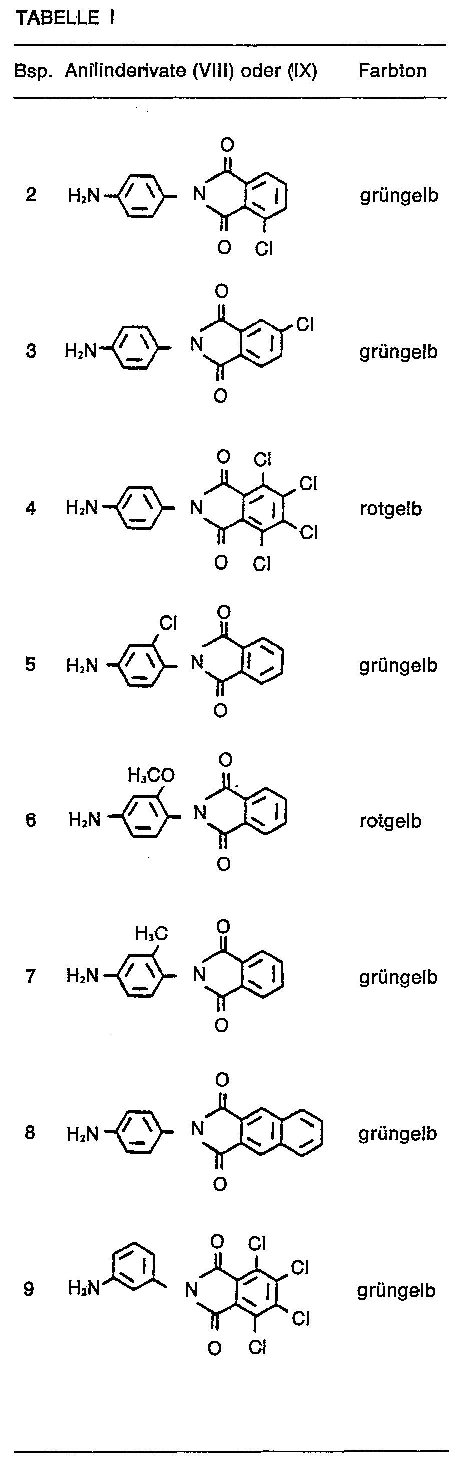

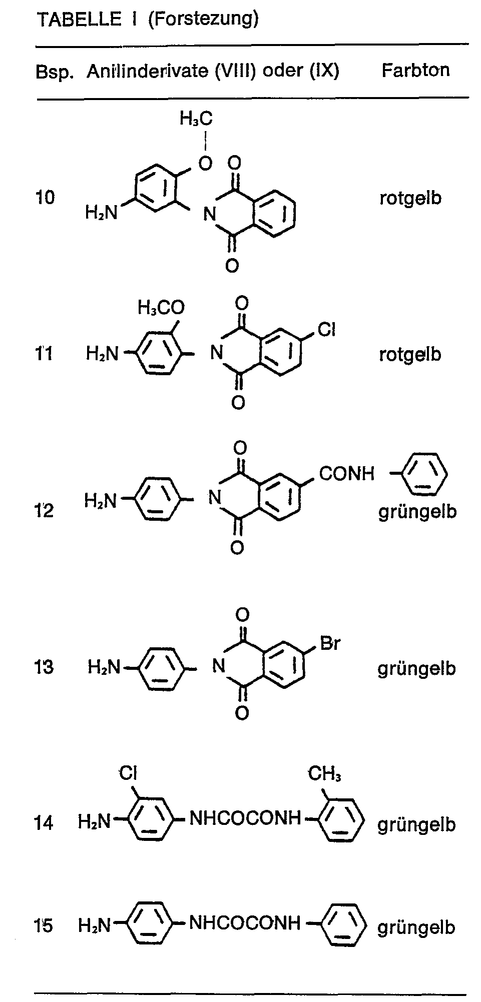

### Beispiel 16 (Anwendung)

### a. Lack

10 Teile des nach Beispiel 1 erhaltenen Farbstoffes und 95 Teile Einbrennlackmischung, die 70°/o Kokosalkydharz (60%ig in Xylol gelöst) und 30°/o Melaminharz (ungefähr 55°/oig gelöst in Butanol/Xylol) enthält, werden in einem Attritor angerieben. Nach dem Auftragen und einer Einbrennzeit von 30 Minuten bei '120°C werden grünstichig gelbe Volltonlackierungen mit guter Licht- und Überspritzechtheit erhalten. Bei Zugabe von Titandioxyd werden grünstichig gelbe Weissaufhellungen erzielt.

Verwendet man die in den Beispielen 2 bis 15 beschriebenen Farbstoffe, so werden Lackierungen in ähnlichen Farbtönen und ähnlichen 'Eigenschaften erhalten.

### b. Druckfarbe

8 Teile des nach Beispiel 1 erhaltenen Pigmenttfarbstoffes, 40 Teile eines mit Phenol/Formaldehyd modifizierten Kolophoniumharzes und 55 bis 65 Teile Toluol werden in einem Dispergieraggregat innig vermischt. Man erhält eine grünstichig gelbe Toluol-Tiefdruckfarbe. Die mit dieser Farbe erhaltenen Drucke weisen gute Licht- und Wetterechtheiten auf.

Bei Verwendung der Farbstoffe aus den Beispielen 2 bis 15 werden ähnliche Ergebnisse erhalten.

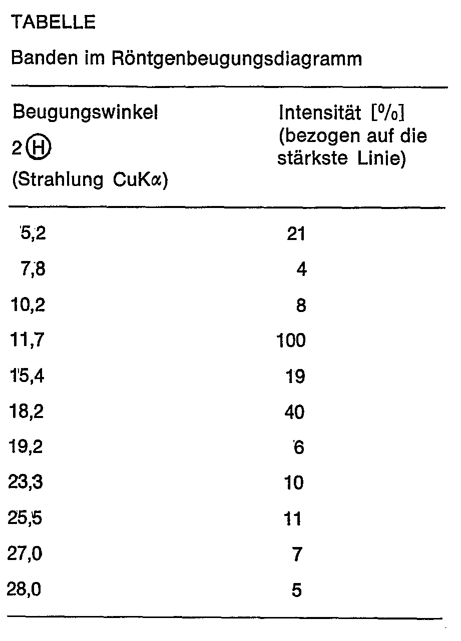

## Patentansprüche

1. Isoindolinpigmente der allgemeinen Formel 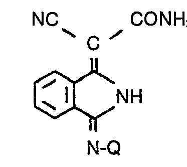 in der
Q eine Gruppe der Formel 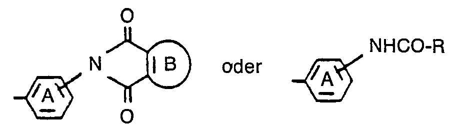 und R N-Phenylcarbamoyl bedeuten,
worin A für 1,3- oder 1,4-Phenylen und der Ring B für 1,2-Phenylen, 1,2- oder 2,3-Naphthylen stehen und wobei A, B und der Phenylrest in R unabhängig voneinander unsubstituiert oder durch nicht löslich machende Gruppen substituiert sind.

2. Isoindolinpigmente gemäss Anspruch 1, dadurch gekennzeichnet, dass Q für eine Gruppe der Formel 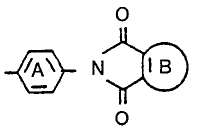 steht, in der A und B die in Anspruch 1 angegebene Bedeutung haben.

'3. Isoindolinpigmente gemäss Anspruch 1 oder 2, dadurch gekennzeichnet, dass A, B und der Phenylrest in R unabhängig voneinander unsubstituiert oder durch Chlor, Brom, C₁- bis C4-Alkyl oder C,- bis C4- Alkoxy substituiert sind.

4. Isoindolinpigmente gemäss Anspruch 1 oder 3, dadurch gekennzeichnet, dass Q für eine Gruppe der Formel 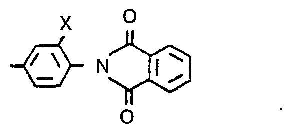 steht, in der X Wasserstoff, Chlor, Methyl oder Methoxy bedeutet.

5. Isoindolinpigmente gemäss Anspruch 1, gekennzeichnet durch die Formel 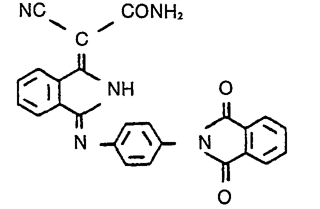 und durch das in Fig. 1 wiedergegebene Röntgenbeugungsdiagramm, das bei einem Beugungswinkel von 2 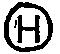 bei 11,7 und 18,2° Linien starker Intensität, bei 5,2, 15,4, 23,3 und 25,5° Linien mittlerer Intensität und bei 7,8, 10,2, 19,2, 27,0, und 28,0° Linien schwacher Intensität aufweist.

6. Verwendung der Isoindolinpigmente gemäss den Ansprüchen 1 bis 5, zum Pigmentieren von Lacken und Druckfarben.

## Claims

1. An isoindoline pigment of the general formula 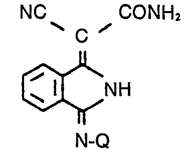
where Q is a group of the formulₗa 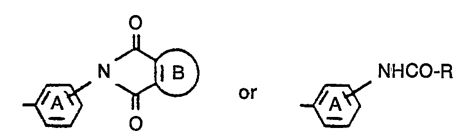
R is N-phenyicarbamoyl,
where A is 1,3- or 1,4-phenylene and the ring B is 1,2- phenylene, 1,2-naphthylene or 2,3-naphthylene, and where A, B and the phenyl radical in R independently of one another are unsubstituted or substituted by groups which do not confer solubility.

2. An isoindoline pigment as claimed in claim 1, characterized in that Q is a group of the formula 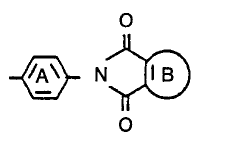 where A and B have the meanings given in claim 1.

3. An isoendoline pigment as claimed in claim 1 or 2, characterized in that A, B and the phenyl radical in R independently of one another are unsubstituted or substituted by chlorine, bromine, C,-C4-alkyl or C,-C4-alkoxy.

4. An isoindoiine pigment as claimed in claim 1 or 3, characterized in that Q is a group of the formula 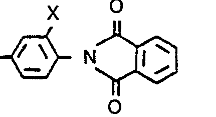 where X is hydrogen, chlorine, methyl or methoxy.

5. An isoindoline pigment as claimed in claim 1, characterized by the formula 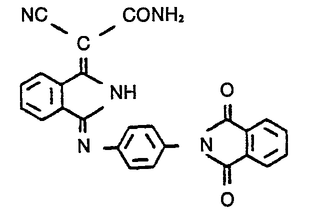 and by the X-ray diffraction diagram which is shown in Fig. 1 and which, for an angle of diffraction of 2 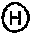 , exhibits lines of high intensity at 11.7 and 18,2°, tines of medium intensity at 5.2, 1'5.4, 23.3 and 25.5° and lines of low intensity at 7.8, 10.2, 19.2, 27.0 and 28.0°.

'6. Use of an isoindoline pigment as claimed in claims 1 to 5 for pigmenting surface coatings and printing inks.

## Revendications

1. Pigments d'isoindoline de formule générale: 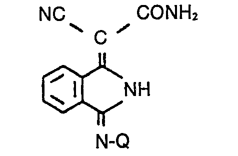 dans laquelle:
Q représente un groupe de formule: 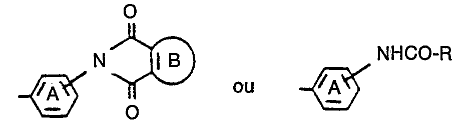
R représente un groupe N-phénylcarbamoyle,
A représente un groupe 1,3- ou 1,4-phénylène et le cycle B est un cycle 1,2-phénylène, 1,2- ou 2;3- naphtylène, A, B et le reste phényle de R pouvant être, indépendamment les uns des autres, non substitués ou substitués par des groupes non solubilisants.

2. Pigments d'isoindoline selon la revendication 1, caractérisés en ce que Q représente un group de formule 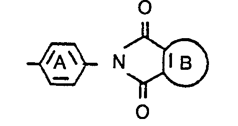 dans laquelle A et B ont les significations indiquées dans la revendication '1.

3. Pigments d'isoindoline selon la revendication 1 ou 2, caractérisés en ce que A, B et le reste phényle de R sont, indépendamment les uns des autres, non substitués ou substitués par le chlore, le brome, des groupes alkyle en C₁-C₄ ou alcoxy en C₁-C₄.

4. Pigments d'isoindoline selon la revendication 1 ou 3, caractérisés en ce que Q représente un groupe de formule 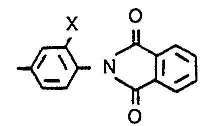 dans laquelle X représente l'hydrogène, le chlore, un groupe méthyle ou méthoxy.

5. Pigments d'isoindoline selon la revendication 1, caractérisés par la formule 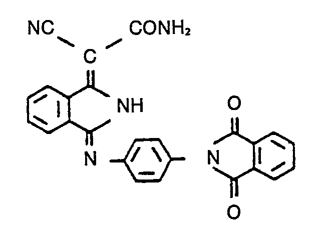 et par le diagramme de diffraction de rayons-X représenté dans la figure '1, qui présente à un angle de diffraction 2 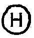 de 11,7 et 18,2° des raies à forte tinensité, de '5,2, 15,4, 23,3 et '25,5° des raies d'intensité moyenne, et de 7,8, 10,2, 19,'2, 27,0 et '28,0 degrés des raies de faible intensité.

'6. Utilisation des pigments d'isoidoline selon l'une quelconque des revendications 1 à 5 pour la pigmentation de peintures et couleurs d'impression.
